**Europäisches Patentamt**

**European Patent Office**

**Office européen des brevets**

(19)

(11) Veröffentlichungsnummer: **0 152 882**
**B1**

(12)

# EUROPÄISCHE PATENTSCHRIFT

(45) Veröffentlichungstag der Patentschrift:
26.08.87

(21) Anmeldenummer: **85101348.2**

(22) Anmeldetag: **08.02.85**

(51) Int. Cl.⁴: **B 41 B 21/16,** G 06 K 15/12,
G 02 B 26/10

(54) Optisch-mechanischer Ablenker.

(30) Priorität: **08.02.84 DE 3404407**

(43) Veröffentlichungstag der Anmeldung:
**28.08.85 Patentblatt 85/35**

(45) Bekanntmachung des Hinweises auf die Patenterteilung:
**26.08.87 Patentblatt 87/35**

(84) Benannte Vertragsstaaten:
**AT CH DE GB LI**

(56) Entgegenhaltungen:
**FR - A - 2 195 801**
**US - A - 4 002 830**
**US - A - 4 179 183**
**US - A - 4 274 703**
**US - A - 4 284 994**

(73) Patentinhaber: **Linotype GmbH, Frankfurter Allee 55-75,
D-6236 Eschborn (DE)**

(72) Erfinder: **Plaot, Michael, Hamburger Strasse 36-38,
D-6236 Eschborn (DE)**

(74) Vertreter: **Schubert, Siegmar, Dipl.-Ing. et al,
Patentanwälte Dr. V. Schmied-Kowarzik Dr. P. Weinhold
Dr.-Ing. G. Dannenberg Dr. D. Gudel Dipl.-Ing. S.
Schubert Dr. P. Barz Grosse Eschenheimer Strasse 39,
D-6000 Frankfurt am Main 1 (DE)**

ACTORUM AG

**Beschreibung**

Die Erfindung betrifft einen optisch-mechanischen Ablenker nach dem Obergriff des Anspruchs 1.

Derartige bekannte optisch-mechanische Ablenker können für verschiedene Anwendungen als Eingabescanner oder Ausgabescanner verwendet werden. Eine typische Anwendung besteht darin, dass eine Materialbahn in der Ablenkebene abgetastet wird, um diese auf Fehlstellen zu untersuchen.

Im vorliegenden Fall ist eine bevorzugte Anwendung des optisch-mechanischen Ablenkers das Setzen typographischer Schriftzeichen mittels eines entsprechend Bildpunkten mit einer Pixelfrequenz modulierten Lichtstrahlenbündels, insbesonderer einer Laserlichtquelle.

Zur Bildebnung optisch-mechanischer Ablenker ist es bereits bekannt, in der Nähe einer ebenen Bildfläche einen Hohlspiegel anzuordnen, der ein paralleles Strahlenbündel auf die Bildfläche fokussiert (DE-AS 1 154 656).

Generell sollen dabei in der Bildebene zwischen aufeinanderfolgenden Ablenkzeilen konstante Abstände erzielt werden, d.h. die Zeilenlage in der Bildfläche gleich bleiben. Diese Beziehung ist wegen einer Reihe von Fehlermöglichkeiten, die u.a. auf die begrenzte Fertigungsgenauigkeit solcher Ablenker zurückgehen, begenzt: Insbesondere können das sogenannte Lagerwobbeln des Lagers, in dem der dreh- oder schwenkbare (Abtast-)Spiegel gelagert ist, und der sogenannte Polygonpyramidalfehler im Falle eines Polygons aus mehreren gegeneinander versetzten reflektierenden Flächen die Beziehung aufeinanderfolgender Ablenkzeilen stören. (Der Polygonpyramidalfehler beinhaltet die Winkelabweichung je einer reflektierenden Fläche des Polygons gegenüber einer Bezugsfläche).

Um den störenden Einfluss solcher Winkelabweichungen zu vermindern, hat man sonst bei f ⊙ Linsen, d.h. Flachfeldlinsen in einer vielgliedrigen Anordnung, eine Zylinderlinse eingeschaltet. Damit ist aber nur eine Verringerung des Winkelfehlers nur in einem begrenzten Bereich möglich.

Der vorliegenden Erfindung liegt die Aufgabe zugrunde, einen optisch-mechanischen Ablenker der eingangs genannten Gattung so auszubilden, dass Schrägstellungen der (Abtast-)Spiegel gegenüber der Dreh- oder Schwenkachse sich nicht schädlich auf die Zeilenlage auswirken.

Diese Aufgabe wird durch die in dem kennzeichnenden Teil des Anspruchs 1 angegebene Erfindung gelöst.

Erfindungsgemäss ist in einem unkomplizierten optischen System nahe dem Abtastspiegel, insbesondere einem Polygon, eine praktisch plan-konvexe Linse in der im einzelnen angegebenen Weise angeordnet. Die Planfläche der plankonvexen Linse ist dem Polygon zugewandt, dessen Reflexionsflächen von einem parallelen Strahlenbündel getroffen werden. Wärend der Schwenkbewegung der verschiedenen Polygonspiegelflächen wird die Planfläche der plan-konvexen Linse unter unterschiedlichem Winkel vom reflektierten Strahl getroffen und gelangt demgemäss unter wechselndem Brechungswinkel in die plan-konvexe Linse. Deren andere, konvexe Fläche wird praktisch senkrecht durchstossen, so dass lediglich eine Fokussierung des abgelenkten Strahls zustande kommt. Ohne den nachgeschalteten Hohlspiegel wäre die so entstehende Zeile gekrümmt. — Die Planfläche, die plan oder mit einem sehr grossen Krümmungsradius dimensioniert ist, verringert den Ablenkwinkel durch Brechung. Dadurch kann der aktive Bereich des Ablenkwinkels gesteigert werden. Dies bedeutet, dass sich das Nutzverhältnis erhöht. (Das Nutzverhältnis ist dabei definiert als Differenz der Zeit zum Überstreichen der Ablenkzeilenlängen mit einer Facetter minus der nicht nutzbaren Totzeit beim Übergang zweier Facetten, bezogen auf die Zeit zum Überstreichen der Ablenkzeilenläge einer Facette). Dieses relativ grosse Nutzverhältnis ist wiederum vorteilhaft, da dadurch die Pixelfrequenz (Bildpunktfrequenz) für eine gegebene Setzgeschwindigkeit in einem typographischen Setzgerät herabgesetzt werden kann. Dies führt zu einer Vereinfachung und kostengünstigeren Fertigung der die Bildpunktfrequenz erzeugenden elektronischen Setzgerätebaugruppen. Wenn andererseits mit einer gegebenen Bildpunktfrequenz und Auflösung gesetzt wird, ist durch den erfindungsgemässen optisch-mechanischen Ablenker einer höhere Ausgabegeschwindigkeit der gesetzten Schriftzeichen möglich. — Die sphärisch-konvexe Fläche der plan-konvexen Linse bewirkt die Hauptfokussierung des Strahlenbündels in die Bildebene (Ablenkebene). Für den Hauptanwendungsfall des typographischen Setzgeräts wird die sphärisch-konvexe Fläche daher auch als Ausgangsfläche bezeichnet, während die plane Fläche der plan-konvexen Linse deren Eingangsfläche darstellt. Für die einzige fokussierende Fläche, die Ausgangsfläche, ist die unvermeidliche sphärische Aberration relativ gering und kann darüber hinaus mit verhältnismässig geringem Aufwand vorkorrigiert werden.

Zu der als plan-konvexe Linse vorgesehenen aplanatischen Einzellinse wird noch bemerkt, dass das hohe Nutzungsverhältnis und die hohe Ausnutzung der aktiven Ablenkzeit durch im Strahlengang zu der Ablenkfläche angeordnete weitere Elemente nicht beeinträchtigt wird.

Die Bedingung, dass es sich bei der Einzellinse um eine aplanatische handelt, führt zu der relativ starken Glasdicke dieser Einzellinse und zu dem Abstand zwischen deren erster planen Fläche zu dem dreh- und schwenkbaren Spiegel bzw. dem Polygon.

Die dem dreh- oder schwenkbaren Spiegel zugewandte annähernd plane Fläche der plan-konvexen Linse braucht nicht völlig eben zu sein. Es genügt, wenn der Krümmungsradius dieser annäherund planen Fläche gegenüber dem Krümmungsradius der zweiten, der Bildebene (Ablenkbene) zugewandten sphärisch-konvexen Fläche gross ist, woraus sich eine relativ kleine Brechkraft der annähernd planen Fläche ergibt.

Die plan-konvexe Linse wird vorzugsweise zweimal von dem Strahlengang durchlaufen.

Für die Anwendung des Ablenkers in einem typographischen Setzgerät hat sich die Dimensionierung als vorteilhaft erwiesen, dass der Krümmungsradius der annäherund planen Fläche der plan-convexen Linse wenigstens fünfmal so gross ist wie der Krümmungsradius der sphärisch-konvexen Fläche dieser Linse ist. Damit ist ohne aufwendige Zusatzkorrektur eine verzeichnungsarme Ablenkung ermöglicht.

Wie oben erwähnt, kann der durch die sphärische Aberration bedingte Abbildungsfehler vorteilhaft durch eine Vorkorrektur weiter entlang dem gesamten nutzbaren Ablenkwinkel bzw. der Ablenkzeilenläge herabgesetzt werden. Zu dieser Kompensation der sphärischen Aberration befindet sich im Eintrittsstrahlengang mindestens eine Zerstreuungslinse.

Zur kompakten Ausbildung des optischen Flachbett-Ablenksystems ist ein zusätzlicher Umlenkspiegel mit einer ebenen reflektierenden Fläche zum Trennen des von der aplanatischen Einzellinse einfallenden und dem von dem feldebnenden Spiegel reflektiertern Strahls vorgesehen.

Eine weitere vorteilhafte Kompensationsmöglichkeit ist in Anspruch 4 angegeben. Der Betrag des Kippens der Dreh- oder Schwenkachse und des feldebnenden Spiegels ergibt sich dabei aus der Geometrie des gesamten Ablenkers.

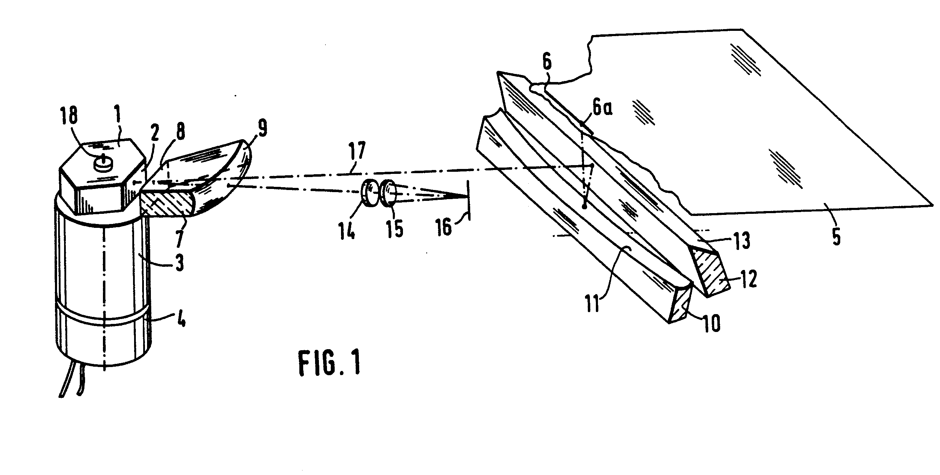

Die Erfindung wird im folgenden anhand einer Zeichnung mit Fig. 1 erläutert. Sie zeigt den vereinfachten Strahlengang des optisch-mechanischen Ablenkers, der bevorzugt Bestandteil eines umfangreichen Systems eines typographischen Setzgeräts ist.

In Fig. 1 gehört zu dem Ablenker ein Polygon 1 mit sechs um jeweils 120° gegenseitig versetzten drehbaren Spiegeln, von denen der gerade wirksame Spiegel mit 2 bezeichnet ist.

Soweit in die voranstehend genannten Leistungsdaten des Ablenkers Zahl und Art der drehbaren Spiegel eingehen, beziehen sich diese Daten auf das Polygon nach Fig. 1.

Das Polygon 1 ist in einem Lager 3 drehbar gelagert und wird durch einen Motor 4 angetrieben. Der Antrieb kann kontinuierlich oder schrittweise erfolgen. Die (gedachte) Drehachse ist mit 18 bezeichnet.

In dem Strahlengang zwischen dem Polygon 1 und einer planen Bildebene (Ablenkebene) 5, die in einem typographischen Setzgerät durch eine lichtempfindliche Filmebene dargestellt sein kann, ist die Optik zum Projizieren eines auf den drehberen Spiegel einfallenden Strahlenbündels in die Bildebene 5 sowie zum Linearisieren der Beziehung zwischen einen Ablenkwinkel entsprechend dem Drehwinkel des Polygons und der Position des in eine Ablenkzeile 6 projizierten Strahlenbündels angeordnet:

Diese umfasst in der Nähe des Polygons eine plankonvexe Linse 7 mit einer dem Polygon zugewandten, annähernd planen Fläche 8 und einer zweiten, der Ablenkebene zugewandten sphärisch-konvexen Fläche 9.

Hieran schliesst sich im weiteren Verlaufe des Strahlengangs zwischen dem Polygon und der Bildebene ein feldebnender Spiegel 10 mit einer sphärischen reflektierenden Fläche 11 an. Die sphärische reflektierende Fläch ist einerseits auf die Ablenkebene und zugleich auf einen zwischengeschalteten Umlenkzeilenspiegel 12 mit einer ebenen reflektierenden Fläche 13 gerichtet, die wiederum auf die sphärisch-konvexe Fläche der plan-konvexen Linse weist.

Der bisher beschriebenen Anordnung sind im Eintrittsstrahlengang noch eine Objektivlinse 14 und eine Zerstreuungslinse 15 vorgeschaltet, die unter anderem zu der Vorkorrektur der sphärischen Aberration des Ablenksystems dienen.

Ausgehend von einer Zwischenbildebene 16, in die ein Bildpunkt eines typographischen Schriftzeichens mit üblichen optischen Mitteln, insbesondere mit einer Dekollimatorlinse (nicht dargestellt) projiziert sein kann, verläuft das Strahlenbündel durch die Zerstreuungslinse 15 und die Objektivlinse 14, die sphärisch-konvexe Fläche 9 der plan-konvexen Linse und tritt aus deren annähernd planer Fläche als Bündel kollimierten Lichts aus. So trifft das Bündel auf die drehbare spiegelnde Fläche 2 des Polygons 1 und wird entsprechend der augenblicklichen Drehstellung des Polygons in die plan-konvexe Linse 7 zurückgespiegelt, um letztlich an einer kontrollierten Position 6a innerhalb der Ablenkzeile 6 projiziert zu werden. Dabei reduziert die annähernd plane Fläche 8 den zur Auslenkung der Position 6a in der Ablenkzeile gegenüber einem Bezugspunkt benötigten Ablenkwinkel des Polygons 1. Diese Reduktion erfolgt im wesentlichen durch Brechung an der annähernd planen Fläche 8. Das durch die plan-konvexe Linse verlaufende Strahlenbündel wird dann beim Austritt an deren sphärisch-konvexer Fläche 9 im wesentlichen in die Position 6a in der Ablenkzeile fokussiert, d.h. die übrigen optischen Elemente des Ablenksystems tragen nur korrigierend zur Fokussierung bei. Wie schon ausgeführt, treffen die Hauptstrahlen des Strahlenbündels für sämtliche nutzbaren Ablenkwinkel als radiale Linien auf die sphärisch-konvexe Fläche 9, die so eine planatische Oberfläche darstellt, siehe z.B. den Hauptstrahl 17.

Das von der sphärisch-konvexen Fläche 9 in Richtung auf die Ablenkebene ausgehende Strahlenbündel wird über die ebene reflektierende Fläche 13 des Umlenkzeilenspiegels 12 in die sphärisch reflektierende Fläche 11 des feldebnenden Spiegels 10 reflektiert und von dieser vollständig fokussiert in die Position 6a in der Ablenkzeile gelenkt. Der Umlenkzeilenspiegel trennt dabei den von der aplanatischen Einzellinse einfallenden Strahl von dem von dem feldebnenden Spiegel reflektierten Strahl.

Aberrationen des feldebnenden Spiegels 10 können durch Gegenmassnahmen an der plan-konvexen Einzellinse 7 kompensiert werden. Dadurch ist es möglich, die Strahl-Bedingung einzuhalten.

**Patentansprüche**

1. Optisch-mechanischer Ablenker mit mindestens einem dreh- oder schwenkbaren (Abtast-)Spiegel (2), der von einem im wesentlichen parallelen Strahlenbündel (17) getroffen wird, welches mittels eines nahe der Bildebene (5) angeordneten Hohlspiegels (10), auf einer ebenen Bildfläche fokussiert wird, dadurch gekennzeichnet, dass nahe dem Abtastspiegel (2) eine praktisch plankonvexe Linse (7) angeordnet ist, deren dem Abtastspiegel zugewandte Planfläche (8) den reflektierten Strahl je nach Ablenkwinkel verschieden stark bricht und deren konvexe Fläche (9) von diesem Strahl im wesentlichen senkrecht durchstossen wird.

2. Ablenker nach Anspruch 1, dadurch gekennzeichnet, dass die plan-konvexe Linse (7) zweimal durchlaufen wird.

3. Ablenker nach Anspruch 1 oder 2, dadurch gekennzeichnet, dass zur Kompensation der sphärischen Aberration im Eintrittsstrahlengang mindestens eine Zerstreuungslinse (15) sich befindet.

4. Ablenker nach einem der Ansprüche 1 bis 3 mit einem in der Nähe des Hohlspiegels angebrachten Planspiegel (12), dadurch gekennzeichnet, dass eine Durchbiegung der Zeile in der Bildebene (5) infolge schrägen Auftreffens des Strahls auf diese beiden Spiegel (10, 12) durch Kippen der Dreh- oder Schwenkachse des Abtastspiegels (2) kompensiert ist.

**Claims**

1. Optical-mechanical diffractor having at least one rotatable or pivotable (scanning) mirror (2), upon which there impinges a substantially parallel pencil of rays (17) which is focussed by means of a concave mirror (10) arranged close to the image plane (5) upon a plane image surface, characterised in that close to the scanning mirror (2) a practically plano-convex lens (7) is arranged the plane face (8) of which, facing the scanning mirror, refracts the reflected ray more less greatly according to the angle of diffraction and the convex face (9) of which is penetrated substantially perpendicularly by this ray.

2. Diffractor according to claim 1, characterised in that the plano-convex lens (7) is passed through twice.

3. Diffractor according to claim 1 or 2, characterised in that at least one divergent lens (15) is situated in the entry ray path for the compensation of the spherical aberration.

4. Diffractor according to one of claims 1 to 3 with a plane mirror (12) fitted in the vicinity of the concave mirror, characterised in that a flexure of the lines in the image plane (5) as a consequence of oblique arrival of the ray upon these two mirrors (10, 12) is compensated by tilting of the rotation or pivot axis of the scanning mirror (2).

**Rivendications**

1. Dispositif opto-mécanique de balayage comportant au moins un miroir de balayage (2) tournant ou pivotant sur lequel tombe un faisceau (17) de rayons sensiblement parallèlles qui converge sur une surface image plane au moyen d'un miroir concave (10) disposé près du plan image (5), caractérisé en ce que près du miroir de balayage (2) est disposée une lentille pratiquement plan-convexe (7) dont la face plane (8), orientée vers le miroir de balayage, réfracte différemment le rayon réfléchi selon chaque fois l'angle de balayage et dont la face convexe (9) est traversée sensiblement orthogonalement par ce rayon.

2. Dispositif de balayage selon la revendication 1, caractérisé en ce que la lentille plan-convexe (7) est traversée deux fois.

3. Dispositif de balayage selon la revendication 1 ou 2, caractérisé en ce que pour compenser l'aberration sphérique, au moins une lentille divergente (15) se trouve sur le chemin des rayons d'entrée.

4. Dispositif de balayage selon l'une des revendications 1 à 3, comportant un miroir plan rapporté au voisinage du miroir concave, caractérisé en ce qu'une flèche de la ligne dans le plan image (5), provoquée par l'incidence oblique du rayon sur ces deux miroirs (10, 12), est compensée par une inclinaison de l'axe de rotation du pivotement du miroir de balayage (2).

FIG.1